# EUROPEAN PATENT APPLICATION

(11) **EP 2 385 509 A2**
(43) Date of publication of application: **09.11.2011**
(21) Application number: 10738753.2
(22) Date of filing: 05.02.2010
(51) Int. Cl.: G08G 1/0962, G06Q 30/00

(54) **APPARATUS AND METHOD FOR PROVIDING PRERECORDED ADVERTISEMENT INFORMATION DISPLAYED IN NAVIGATION SYSTEM DURING ROUTE GUIDANCE**

(30) Priority: 06.02.2009 KR 20090009652
(71) Applicant: Thinkwaresystems Corp., Seoul 138-051 (KR)
(72) Inventor: YANG, Seung Seock, Anyang-si Gyeonggi-do 431-783 (KR)
(74) Representative: Cabinet Plasseraud
(86) International application number: PCT/KR2010/000708
(87) International publication number: WO 2010/090469

(57) **Abstract**

An advertisement providing apparatus using a navigation system is provided comprising a path providing unit providing a path guidance for the navigation system, an advertisement expose unit exposing an advertisement associated with the path guidance, and an information recording unit recording exposure information according to exposure of the advertisement, wherein the recorded exposure information is used to grasp a consumption history for the advertisement.

## Description

### BACKGROUND

### Field

The embodiments of this document are directed to a navigation system and more specifically to an advertisement providing apparatus and method using a navigation system, which provides an advertisement during a path guidance for the navigation system and monitors a user's reaction for the advertisement.

### Related Art

A geographic information system (GPS) is an information system that integrally processes attribute data associated with geographical information.

The GIS provides for easy search for location information, such as latitudes or longitudes, and may convert geographical information required by a user into a proper map image.

The GIS includes a database that maintains map data including POI (point of interest) and geometry data for an entire ma.

The geometry data includes geometrical information such as roads, rivers, mountains, buildings, or facilities, and the POI includes name information as text information for roads, buildings, or facilities.

Recently, a GIS-based map service is provided to a mobile terminal, such as navigation systems.

A navigation system includes a GPS (global positioning system) module. The navigation system receives predetermined data from a GPS satellite and calculates the position of a moving object. The navigation system may provide an map image in which the present location of the moving object is mapped to pre-stored map data together with a map image of an area desired by a user.

In addition to the POI, the navigation system may provide various types of information, such as places of interest, fun places, local specialties, or local festivals, which are helpful for driving or sightseeing.

Further, as the navigation system is generally used for path guidance, the navigation system plays a role as an advertisement medium as well.

The conventional advertisement method using the navigation system provides only the function of informing a user that an advertiser's business shop is located at a predetermined point over the map. Accordingly, the conventional advertisement method has a limit to imprinting the advertiser on the user's memory.

### SUMMARY

The embodiments of this document provide an advertisement providing apparatus and method using a navigation system, which may provide an advertisement in various forms while providing a path guidance in the navigation system and may record exposure information including exposure of the advertisement and a user's reaction to the exposure and which may utilize the exposure information of the advertisement in various aspects for balancing the interest between an advertiser and the user.

According to an embodiment of this document, there is provided an advertisement providing apparatus using a navigation system comprising a path providing unit providing a path guidance for the navigation system, an advertisement expose unit exposing an advertisement associated with the path guidance, and an information recording unit recording exposure information according to exposure of the advertisement.

According to an embodiment of this document, there is provided an advertisement providing method using a navigation system, comprising providing a path guidance for the navigation system, exposing an advertisement associated with the path guidance, and recording exposure information according to exposure of the advertisement.

The recorded exposure information is used to grasp a consumption history for the advertisement.

According to an embodiment, there is provided an advertisement providing apparatus using a navigation system comprising a path supplying unit supplying a path guidance for the navigation system, an advertisement supplying unit supplying an advertisement from an advertiser in association with the path guidance, an information collecting unit collecting exposure information according to exposure of the advertisement, and an advertisement managing unit grasping a consumption history for the advertisement based on the collected exposure information.

According to an embodiment, there is provided an advertisement providing method using a navigation system, comprising providing a path guidance for the navigation system, supplying an advertisement from an advertiser in association with the path guidance, collecting exposure information according to exposure of the advertisement, and grasping a consumption history for the advertisement based on the collected exposure information.

The exposure information is provided to a user who consumed an advertisement associated with the path guidance.

According to the embodiments, the advertisement associated with the path guidance may be exposed while providing the path guidance for the navigation system, thus allowing a driver to concentrate on advertisements around a path and allowing a user to directly access the advertisements in an advanced exposure mode.

According to the embodiments, the exposure information may be differentially recorded according to an advertisement exposure mode, and it may be possible to grasp how many times the user of the navigation system consumed the advertisements using the exposure information.

According to the embodiments, a proper advertisement expense may be determined based on the exposure information of the advertisement.

According to the embodiments, compensation may be provided to the user who consumed the advertisement in the form of points based on the exposure information of the advertisement, thus prompting consumption of the advertisement.

### BRIEF DESCRIPTION OF THE DRAWINGS

The implementation of this document will be described in detail with reference to the following drawings in which like numerals refer to like elements:

Fig. 1 is a flowchart illustrating a process of recording exposure information of an advertisement provided during the course of guiding a path in a user terminal of a navigation system according to an embodiment of this document;

Fig. 2 is a flowchart illustrating a process in which a server supplying a path guidance and an advertisement utilizes exposure information of the advertisement;

Fig. 3 is a block diagram illustrating an internal structure of a user terminal in an advertisement providing apparatus using a navigation system according to an embodiment of this document; and

Fig. 4 is a block diagram illustrating an internal structure of a server in an advertisement providing apparatus using a navigation system according to an embodiment of this document.

### DETAILED DESCRIPTION

Hereinafter, embodiments of this document will be described in detail with reference to the accompanying drawings.

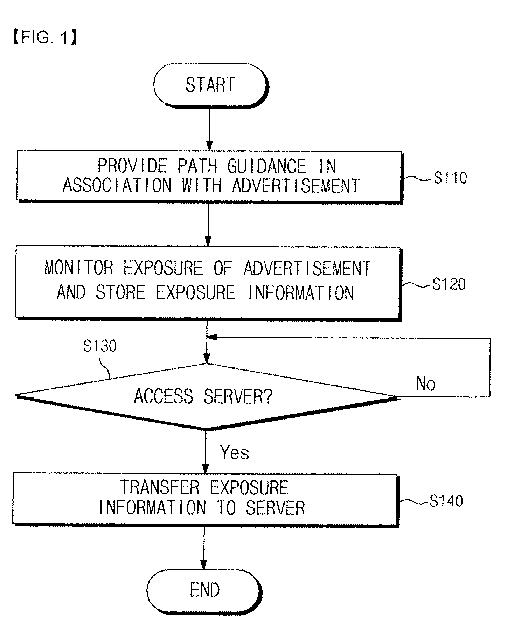

Fig. 1 is a flowchart illustrating a process of recording exposure information of an advertisement provided during the course of guiding a path in a user terminal of a navigation system according to an embodiment of this document.

Referring to Fig. 1, an advertisement providing method using a navigation system according to an embodiment includes the following steps.

In step S110, the user terminal provides a path guidance and exposes an advertisement associated with the path guidance.

The advertisement may be exposed in a simple exposure mode or in a advanced exposure mode. The simple exposure mode may display the advertisement in the form of a banner on a predetermined area of the screen providing the path guidance. The advertisement may be displayed on a predetermined fixed area of the screen or on an area pre-mapped to the advertisement and corresponding to a predetermined geographical location.

The simple exposure mode may output the advertisement in the form of a voice during the course of providing a voice path guidance for navigation. For example, in the simple exposure mode, a commercial song corresponding to the advertisement may be output.

The advanced exposure mode provides details on the advertisement on the screen providing the path guidance in response to a user's request. The advanced exposure mode may provide a further intensified advertising effect than the simple exposure mode. The advanced exposure mode activates and displays an icon for the advertisement so that the user may request the details on the advertisement through the icon. The details may include a moving picture and voice guidance associated with the advertisement.

In step S120, the user terminal monitors the exposed advertisement during the course of the path guidance and records exposure information of the advertisement according to the exposure.

The user terminal accumulates consumption data consumed by the user and stores the accumulated consumption data as the exposure information.

The consumption data includes at least one of the number of times by which the advertisement is exposed to the user in the simple exposure mode and an exposure time. The consumption data includes at least one of the number of times by which the user requested the advertisement details in the advanced exposure mode and a view time during which the user viewed the advertisement details.

The exposure information is stored and maintained in a storage of the user terminal. The user terminal may encode the exposure information of the advertisement using an identification (ID) pre-assigned to the user terminal before storage.

In steps S130 and S140, when maintaining a connection to a server supplying the path guidance and the advertisement so that the user terminal can perform data communication with the server, the user terminal may transfer the recorded exposure information to the server.

The user terminal may conduct the transfer of the exposure information in response to the user's request or automatically as soon as the user terminal gets access to the server regardless of the user's request.

Through the transferred exposure information, the server may catch a consumption history of the advertisement so that the exposure information may be used for various purposes.

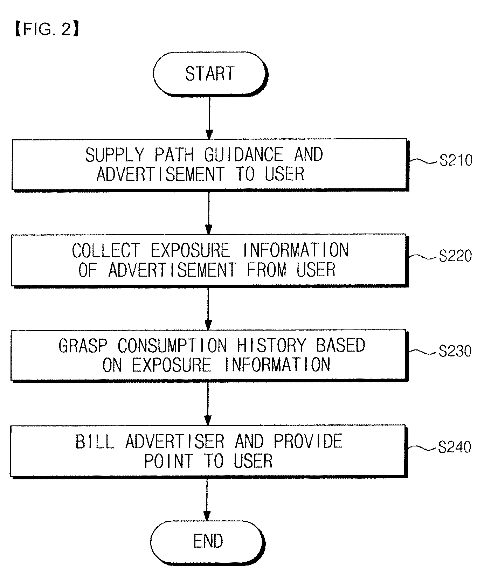

Fig. 2 is a flowchart illustrating a process in which a server supplying a path guidance and an advertisement utilizes exposure information of the advertisement.

Referring to Fig. 2, an advertisement providing method using a navigation system according to an embodiment includes the following steps.

In step S210, a server supplies a user with entire map data and software for path guidance for use in a navigation system. The server may supply an advertisement from an advertiser in association with the path guidance. The server may also supply advertisement details including a moving picture or a voice guidance associated with the advertisement.

In step S220, the server collects exposure information as the advertisement is exposed. The collection of the exposure information may be achieved by receiving the exposure information from a user consuming the advertisement associated with the path guidance. During the provision of the path guidance, the server maintains connection with the user terminal exposing the advertisement for data communications and receives the exposure information for the advertisement from the user terminal. For example, the exposure information may be gathered while the user attempts to let the user terminal access the server for upgrading the path guidance.

The exposure information includes the number of times by which the advertisement is exposed to the user or an exposure time, or the number of times by which the user requested the details on the exposed advertisement or a view time during which the user viewed the details.

The server may manage the collected exposure information for each advertisement or for each user. In step S230, the server may catch a consumption history for the advertisement based on the collected exposure information. The server may be aware of how much the advertisement was consumed by the user based on the number of times of exposure, exposure time, the number of times of request, and view time for the advertisement.

In step S240, the server determines an expense for the advertisement or provides the user with compensation in the form of points depending on the collected exposure information. The server may determine the advertisement expense based on the number of times of exposure, exposure time, the number of times of request, and view time for the advertisement, and may charge the determined advertisement expense to the advertiser who placed an order for the advertisement.

Further, the server may provide points to the user consuming the advertisement based on the number of times of exposure, exposure time, the number of times of request, and view time for the advertisement. The number of points to be provided may depend on based on the number of times of exposure, exposure time, the number of times of request, and view time for the advertisement. The server may collect the exposure information for each advertisement exposure mode (for example, the simple exposure mode or advanced exposure mode) and may provide a different number of points for each exposure mode.

The points may be used as an expense for purchasing content associated with the path guidance (for example, software for upgrade). For example, the points may be used to purchase various online contents (for example, music files or games) or goods (for example, gas discount coupon) in an online shopping mall including the server.

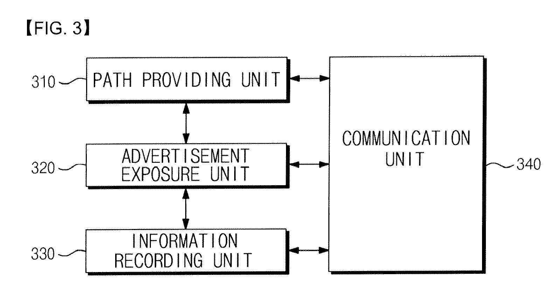

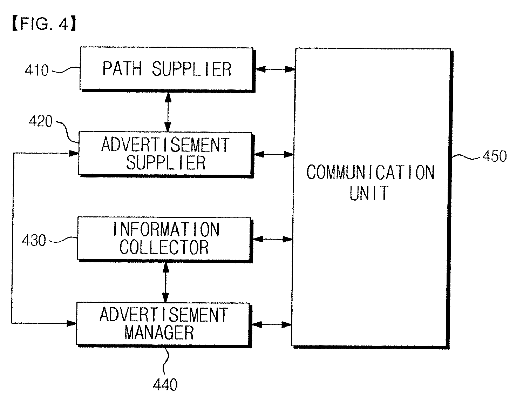

An advertisement providing apparatus using a navigation system for performing the advertisement providing method is described with reference to Figs. 3 and 4.

Fig. 3 is a block diagram illustrating an internal structure of a user terminal in an advertisement providing apparatus using a navigation system according to an embodiment of this document.

Referring to Fig. 3, the user terminal includes a path providing unit 310, an advertisement exposure unit 320, an information recording unit 330, and a communication unit 340.

The path providing unit 310 provides a path guidance for the navigation system. The path providing unit 310 maintains a connection with a server through the communication unit 340, and receives the overall map data and software for the path guidance from the server.

The advertisement exposure unit 320 exposes an advertisement associated with the path guidance while performing the path guidance. The advertisement exposure unit 320 maintains a connection with the server through the communication unit 340, and receives an advertisement associated with the path guidance from the server.

The advertisement exposure unit 320 displays the advertisement on a screen providing the path guidance or outputs the advertisement in the form of a voice while performing the path guidance as a voice (simple exposure mode). Further, the advertisement exposure unit 320 activates an icon for the advertisement on the screen so that when a user clicks the icon, the advertisement exposure unit 320 may provide details on the advertisement in the form of a moving picture or voice (advanced exposure mode).

The information recording unit 330 monitors the exposure of the advertisement during the path guidance and records exposure information of the advertisement according to the exposure. The exposure information refers to data associated with consumption of the advertisement by the user (also referred to as "consumption data"). The consumption data includes the number of times by which the advertisement is exposed to the user or an exposure time in the simple exposure mode, and the number of times by which the user requested the advertisement details and a view time during which the user viewed the advertisement details in the advanced exposure mode.

The information recording unit 330 encodes and stores the exposure information of the advertisement using a unique number pre-allocated to the user terminal. The information recording unit 330 may include an embedded storage and an external storage.

The information recording unit 330 maintains a connection with the server through the communication unit 340 and transmits the recorded exposure information to the server.

The communication unit 340 includes a communication means for access to a wireless communication network, such as a Wibro^{™} network or a Bluetooth network, and functions to maintain a connection with the server.

Fig. 4 is a block diagram illustrating an internal structure of a server in an advertisement providing apparatus using a navigation system according to an embodiment of this document.

Referring to Fig. 4, the server includes a path supplier 410, an advertisement supplier 420, an information collector 430, an advertisement manager 440, and a communication unit 450.

The path supplier 410 supplies the overall map data and software for path guidance of the navigation system to the user terminal. The path supplier 410 maintains a connection with the user terminal through the communication unit 450.

The advertisement supplier 420 supplies an advertisement from an advertiser in association with the path guidance. The advertisement supplier 420 may map the advertisement to a predetermined location on the map data. The advertisement supplier 420 may supply advertisement details including a moving picture or voice guidance associated with the advertisement as well. The advertisement supplier 420 maintains a connection with the user terminal through the communication unit 450 and supplies the advertisement to the user terminal in association with the path guidance.

The information collector 430 collects exposure information according to exposure of the supplied advertisement. The information collector 430 maintains a connection with the user terminal through the communication unit 450 and receives the exposure information for the advertisement from the user terminal.

The advertisement manager 440 grasps a consumption history for the advertisement using the collected exposure information. The advertisement manager 440 is aware of how many times the advertisement was consumed by a user through the exposure information collected for the advertisement. The advertisement manager 440 may determine an advertisement expense using the exposure information and may charge an advertiser for the determined advertisement expense. The advertisement manager 440 may provide compensation to a user who consumed the advertisement in the form of points. The points may be differentially provided depending on the exposure information. The points may be used for purchasing various games or contents or for upgrading the software. The points may also be used online for buying goods, for example, a gas discount coupon.

The advertisement manager 440 maintains a connection with the advertiser or user terminal through the communication unit 450 and transfers the determined advertisement expense to the advertiser or the points to the user.

The communication unit 450 is a communication means accessible to a wired or wireless communication network. The communication unit 450 maintains a connection with the advertiser or user terminal.

The embodiments of this document may expose the advertisement in various forms during the path guidance for the navigation system and may record exposure information of the advertisement. Further, the embodiments of this document may record the exposure information based on the simple exposure mode separately from the exposure information based on the advanced exposure mode.

The embodiments of this document allow a user of the navigation system to be easily aware of how many times the user consumed the advertisement through the exposure information so that the user may determine a proper advertisement expense based on the result. And, the user who consumed the advertisement may receive points according to the exposure information of the advertisement, which allows for the user's active advertisement consumption.

The advertisement providing method using a navigation system according to the embodiments of this document may be implemented as programs that may executed by various computer means and recorded in a computer-readable medium. The computer-readable medium may contain a program command, a data file, and a data structure, alone or in a combination thereof. The program recorded in the medium may be one specially designed or configured for the embodiments of this document or one known to those of ordinary skill in the art. Examples of the computer-readable medium may include magnetic media, such as hard disks, floppy disks, or magnetic tapes, optical media, such as CD-ROMs or DVDs, magneto-optical media, such as floptical disks, ROMs, RAMs, flash memories, or other hardware devices that are configured to store and execute program commands. Examples of the program may include machine language codes such as those made by a compiler as well as high-class language codes executable by a computer using an interpreter. The above-listed hardware devices may be configured to operate as one or more software modules to perform the operations according to the embodiments of this document, and vice versa.

As described above, the advertisement providing apparatus and method using a navigation system records exposure information of an advertisement provided during a path guidance for the navigation system and exposes the advertisement during the path guidance in association with the path guidance. Thus, the advertisement may be concentrated on the periphery of the path. Further, the advanced exposure mode enables a user's direct access to the advertisement.

The embodiments of this document have been explained above with reference to exemplary embodiments. It will be evident to those skilled in the art that various modifications may be made thereto without departing from the broader spirit and scope of the embodiments. Further, although the embodiments have been described in the context its implementation in particular environments and for particular applications, those skilled in the art will recognize that this document's usefulness is not limited thereto and that the embodiments can be beneficially utilized in any number of environments and implementations. The foregoing description and drawings are, accordingly, to be regarded in an illustrative rather than a restrictive sense.

## Claims

1. An advertisement providing apparatus using a navigation system comprising:
a path providing unit configured to provide a path guidance for the navigation system;
an advertisement expose unit configured to expose an advertisement associated with the path guidance; and
an information recording unit configured to record exposure information according to exposure of the advertisement, wherein the recorded exposure information is used to grasp a consumption history for the advertisement.

2. The advertisement providing apparatus of claim 1, wherein the advertisement exposure unit displays the advertisement while providing the path guidance.

3. The advertisement providing apparatus of claim 2, wherein the advertisement exposure unit activates an icon for the advertisement and provides details on the advertisement when a user clicks the icon.

4. The advertisement providing apparatus of claim 3, wherein the details include a moving picture or a voice guidance associated with the advertisement.

5. The advertisement providing apparatus of claim 1, wherein the advertisement exposure unit outputs the advertisement in the form of a voice while providing the path guidance.

6. The advertisement providing apparatus of claim 1, wherein the information recording unit accumulates consumption data associated with consumption of the advertisement by a user and records the accumulated consumption data as the exposure information.

7. The advertisement providing apparatus of claim 6, wherein the consumption data includes at least one of the number of times by which the advertisement is exposed to the user and an exposure time.

8. The advertisement providing apparatus of claim 6, wherein the consumption data includes at least one of the number of times by which the user requested the details on the advertisement and a view time during which the user viewed the details.

9. The advertisement providing apparatus of claim 1, wherein the information recording unit includes at least one of an embedded storage and an external storage.

10. The advertisement providing apparatus of claim 1, further comprising a communication unit performing data communications with a server providing the advertisement, wherein the communication unit transmits the exposure information recorded in the information recording unit to the server.

11. An advertisement providing apparatus using a navigation system comprising:
a path supplying unit configured to supply a path guidance for the navigation system;
an advertisement supplying unit configured to supply an advertisement from an advertiser in association with the path guidance;
an information collecting unit configured to collect exposure information according to exposure of the advertisement; and
an advertisement managing unit configured to grasp a consumption history for the advertisement based on the collected exposure information, wherein the exposure information is provided to a user who consumed an advertisement associated with the path guidance.

12. The advertisement providing apparatus of claim 11, further comprising a communication unit performing data communications with a user terminal exposing the advertisement associated with the path guidance, wherein the information collecting unit receives the exposure information from the user terminal through the communication unit.

13. The advertisement providing apparatus of claim 12, wherein the exposure information includes at least one of the number of times by which the advertisement is exposed by the user terminal and an exposure time.

14. The advertisement providing apparatus of claim 12, wherein the advertisement supplying unit supplies details associated with the advertisement, wherein the exposure information includes at least one of the number of times by which a user of the user terminal requested the details on the advertisement and a view time during which the user viewed the details.

15. The advertisement providing apparatus of claim 14, wherein the details include a moving picture or a voice guidance associated with the advertisement.

16. The advertisement providing apparatus of claim 11, wherein the advertisement managing unit determines an advertisement expense for the advertisement based on the exposure information.

17. The advertisement providing apparatus of claim 11, wherein the advertisement managing unit provides a user consuming the advertisement with compensation in the form of points based on the exposure information.

18. The advertisement providing apparatus of claim 17, wherein the advertisement managing unit differentially provides the points according to the exposure information.

19. The advertisement providing apparatus of claim 17, wherein the points are used for purchasing contents associated with the path guidance.

20. The advertisement providing apparatus of claim 17, wherein the points are used for purchasing online contents or goods.

21. An advertisement providing method using a navigation system, comprising:
providing a path guidance for the navigation system;
exposing an advertisement associated with the path guidance; and
recording exposure information according to exposure of the advertisement, wherein the recorded exposure information is used to grasp a consumption history for the advertisement.

22. The advertisement providing method of claim 21, wherein exposing the advertisement includes displaying the advertisement while providing the path guidance.

23. The advertisement providing method of claim 22, wherein exposing the advertisement includes activating an icon for the advertisement and providing details on the advertisement when a user clicks the icon.

24. The advertisement providing method of claim 23, wherein the details include a moving picture or a voice guidance associated with the advertisement.

25. The advertisement providing method of claim 21, wherein exposing the advertisement includes outputting the advertisement in the form of a voice while providing the path guidance.

26. The advertisement providing method of claim 21, wherein recording the exposure information includes accumulating consumption data associated with consumption of the advertisement by a user and recording the accumulated consumption data as the exposure information.

27. The advertisement providing method of claim 26, wherein the consumption data includes at least one of the number of times by which the advertisement is exposed to the user and an exposure time.

28. The advertisement providing method of claim 26, wherein the consumption data includes at least one of the number of times by which the user requested the details on the advertisement and a view time during which the user viewed the details.

29. The advertisement providing method of claim 21, further comprising performing data communications with a server supplying the advertisement, wherein performing data communications includes transmitting the recorded exposure information to the server.

30. An advertisement providing method using a navigation system, comprising:
providing a path guidance for the navigation system;
supplying an advertisement from an advertiser in association with the path guidance;
collecting exposure information according to exposure of the advertisement; and
grasping a consumption history for the advertisement based on the collected exposure information, wherein the exposure information is provided to a user consuming an advertisement associated with the path guidance.

31. The advertisement providing method of claim 30, further comprising performing data communications with a user terminal exposing the advertisement associated with the path guidance, wherein collecting the exposure information includes receiving the exposure information from the user terminal.

32. The advertisement providing method of claim 31, wherein the exposure information includes at least one of the number of times by which the advertisement is exposed by the user terminal and an exposure time.

33. The advertisement providing method of claim 31, wherein supplying the advertisement includes supplying details associated with the advertisement, wherein the exposure information includes at least one of the number of times by which a user of the user terminal requested the details on the advertisement and a view time during which the user viewed the details.

34. The advertisement providing method of claim 33, wherein the details include a moving picture or a voice guidance associated with the advertisement.

35. The advertisement providing method of claim 30, wherein grasping the consumption history includes determining an advertisement expense for the advertisement based on the exposure information.

36. The advertisement providing method of claim 30, wherein grasping the consumption history includes providing a user consuming the advertisement with compensation in the form of points based on the exposure information.

37. The advertisement providing method of claim 36, wherein grasping the consumption history includes differentially providing the points according to the exposure information.

38. The advertisement providing method of claim 36, wherein the points are used for purchasing contents associated with the path guidance.

39. The advertisement providing method of claim 36, wherein the points are used for purchasing online contents or goods.

40. A computer readable recording medium storing a program performing the method claimed in any one of claims 21 to 39.
